# EUROPÄISCHE PATENTSCHRIFT

(11) **EP 2 815 644 B1**
(45) Veröffentlichungstag und Bekanntmachung des Hinweises auf die Patenterteilung: **09.08.2017**
(21) Anmeldenummer: 14172753.7
(22) Anmeldetag: 17.06.2014
(51) Int. Cl.: A01M 7/00

(54) **Fahrbare landwirtschaftliche Verteilmaschine für flüssige Medien**
Mobile agricultural distribution machine for liquid media
Épandeuse agricole mobile pour média liquide

(30) Priorität: 19.06.2013 DE 102013106377
(43) Veröffentlichungstag der Anmeldung: 24.12.2014
(73) Patentinhaber: HORSCH LEEB Application Systems GmbH, 94562 Oberpöring (DE)
(72) Erfinder: Leeb, Theodor, 94562 Oberpöring (DE)
(74) Vertreter: Benninger, Johannes

(56) Entgegenhaltungen:
- WO-A1-2010/002274
- FR-A1- 2 565 000
- US-A1- 2002 185 180

## Beschreibung

Die vorliegende Erfindung betrifft eine fahrbare landwirtschaftliche Maschine zum Verteilen von flüssigen Medien mit den Merkmalen des unabhängigen Anspruchs 1.

Landwirtschaftliche Feldspritzen werden zum Ausbringen von flüssigen Pflanzenschutz- oder Düngemitteln verwendet. Derartige Feldspritzen sind in unterschiedlichen Ausführungsvarianten bekannt, bspw. als gezogene oder selbstfahrende oder als direkt an das Zugfahrzeug angebrachte Maschinen - in diesem Fall normalerweise mittels Dreipunktanbau verbunden. Die verschiedenen Ausführungsvarianten weisen die Gemeinsamkeit auf, dass sie jeweils einen Tank bzw. Sammelbehälter zum Bevorraten und Transportieren der auszubringenden Flüssigkeiten besitzen. Bei den gezogenen und den selbstfahrenden Varianten ist der Sammelbehälter fahrbar und deshalb mit einer oder mehreren Achsen und daran angeordneten Laufrädern ausgestattet. Ebenso besitzen alle Feldspritzen ein sich quer zur Fahrtrichtung erstreckendes Verteilgestänge, mit welchem die auszubringenden Medien gleichmäßig über die Breite des Verteilgestänges verteilt werden können.

Bei den gezogenen und den selbstfahrenden Feldspritzen können die Tanks zum Teil große Volumina aufweisen. So sind durchaus Tanks mit einem Fassungsvermögen von 5.000 Litern und mehr möglich. Hierdurch ergeben sich jedoch einige Fahrstabilitätsprobleme. So kommt es bei wechselnden Fahrsituationen wie bspw. beim Beschleunigen, Bremsen, Kurvenfahren usw. vor, dass die Flüssigkeiten im Tank zu Bewegungen angeregt werden. Um diesen Bewegungen entgegen zu wirken, werden die Tanks üblicherweise mit sog. Schwallwänden versehen. Ein Behälter mit solchen Schwallwänden geht bspw. aus der DE 198 51 613 A1 hervor.

Ein ebenfalls wichtiges Kriterium für die Fahrstabilität ist der Abstand des Maschinenschwerpunkts zur Bodenoberfläche. Je geringer der Abstand zwischen dem Schwerpunkt des Tanks bzw. der Maschine und der Bodenoberfläche ist, desto besser ist die Fahrstabilität. Gerade bei Kurvenfahrten ist dies besonders zu beachten. Um diesen Aspekten Rechnung zu tragen, wird bislang versucht, die Tanks so zu konstruieren, dass der Schwerpunkt möglichst flach über der Bodenoberfläche liegt.

Um den Maschinenschwerpunkt möglichst weit nach unten zu bringen, sind verschiedene Ansätze denkbar. So wäre es möglich, den Tank möglichst flach zu konstruieren. Hierbei treten aber, gerade bei großvolumigen Tanks, mehrere Probleme auf. Zum einen ist die Maschinen- bzw. Tankbreite auf max. drei Meter begrenzt, da breitere Maschinen nicht auf öffentlichen Straßen bewegt werden dürfen. Zum anderen ist es auch immer wünschenswert, die Maschinen so kurz wie möglich zu bauen, um hierdurch eine möglichst große Wendigkeit zu erreichen.

Ein weiterer begrenzender Faktor, den Tank möglichst tief zu positionieren, besteht darin, dass unterhalb des Tanks eine Rahmenkonstruktion zum Befestigen des Tanks und des Verteilgestänges hindurch geht, wodurch wiederum der Tank höher liegt. Um diesem Problem entgegen zu wirken, werden die Rahmen mittig zur Maschine positioniert und die Tanks links und rechts neben dem Rahmen nach unten über den Rahmen verlängert. Durch diese Anordnung wird der Tank jedoch im unteren Bereich zweigeteilt, wodurch zwei Ausläufe bzw. Sümpfe entstehen.

Die beiden Sümpfe werden in der Regel über ein Verbindungsstück miteinander verbunden. Diesem Verbindungsstück ist darüber hinaus noch eine Förderpumpe zugeordnet, mit welcher die zu verteilende Flüssigkeit zu einem Verteilergestänge transportiert wird. Bei den Förderpumpen handelt es sich aufgrund ihrer einfachen und robusten Bauart meist um Kreiselpumpen.

Eine derartige Vorrichtung ist beispielsweise aus der FR 2565000 A1 bekannt. Zwei benachbarte Speichertanks sind jeweils über eine Förderleitung an eine gemeinsame Pumpe gekoppelt. Mittels der Pumpe kann das flüssige Medium in Richtung einer Verteildüse weiterbefördert und auf dem Feld ausgebracht werden. Zudem offenbart die FR-Patentanmeldung einen Kreislauf, mittels welchem flüssiges Medium in die Speichertanks rückgeführt werden kann. Hierdurch soll vermieden werden, dass einer der beiden Tanks vorzeitig entleert ist.

Ein Problem dieser Anordnung besteht darin, dass sich beim Befahren von Hanglagen der höher gelegene Sumpf früher entleert, wodurch es vorkommen kann, dass die Förderpumpe aus diesem Sumpf Luft ansaugt. Das Ansaugen von Luft bringt jedoch einige Nachteile mit sich. So kann es zum einen zu einer ungleichmäßigen Dosierung der auszubringenden Flüssigkeit kommen. Zum anderen kann die Förderpumpe durch das Ansaugen von Luft beschädigt werden.

Um dem Ansaugen von Luft entgegen zu wirken, wäre es bspw. vorstellbar, die Sümpfe so zu gestalten, dass im Tank unter allen auftretenden Betriebsbedingungen eine ausreichend große Restmenge vorhanden bleibt. Dies hat jedoch den Nachteil, dass diese Restmenge bei der Reinigung des Tanks mitsamt den Reinigungsmitteln und Reinigungsflüssigkeiten entsorgt werden muss, was sich nachteilig auf den Bedienkomfort auswirkt. Ebenso wäre es möglich, die beiden Sümpfe jeweils mit einer separaten Pumpe auszustatten; dies wirkt sich jedoch einerseits nachteilig auf die Kosten aus und führt andererseits zu einem vergrößerten Bauaufwand für die erforderlichen Leitungs- und Schlauchverbindungen.

Die US 2002/0185180 A1 offenbart einen Tank, welcher aus einem Hauptbehälterabschnitts, der seitlich über ein Fahrzeug ragt, mit einem Paar parallel zueinander beanstandete Arme besteht. Der Tank bildet einen Hohlraum auf der Unterseite des Seitenabschnittes aus, in welchem eine Pumpe mit einem Elektromotor positioniert ist. Die zwei parallel zueinander beanstandeten Arme weisen jeweils Öffnungen auf, welche mittels Ventile gesteuert werden und durch ein Rohr bzw. ein Schlauch miteinander verbunden sein können. Aufgrund des Ansaugens der Pumpe kann ein Transportkanal mit einem Port geöffnet werden, so dass eine vollständige Entleerung der Flüssigkeit aus dem Tank aufgrund dieser Anordnung erreicht werden kann.

Der Erfindung liegt also die Aufgabe zu Grunde, eine verbesserte Verteilmaschine mit mindestens zwei Speicherkammern zur Verfügung zu stellen, die auch beim Befahren von Hanglagen stetig eine ausreichende Flüssigkeitsmenge zur Verfügung stellt. Zudem soll bei dieser verbesserten Verteilmaschine die Restmenge im Tank so gering wie möglich gehalten werden.

Die obige Aufgabe wird durch eine landwirtschaftliche Verteilmaschine mit den Merkmalen im unabhängigen Patentanspruch 1 gelöst. Weitere vorteilhafte Ausgestaltungen werden durch die Unteransprüche beschrieben.

Die Erfindung betrifft eine landwirtschaftliche Verteilmaschine für flüssige Medien wie Pflanzenschutzmittel, Düngemittel o. dgl. So kann die landwirtschaftliche Verteilmaschine bspw. zur Verteilung des flüssigen Mediums auf einer Ackerfläche ausgebildet sein. In bevorzugten Ausführungsformen besitzt die landwirtschaftliche Verteilmaschine zwei oder mehr die landwirtschaftliche Verteilmaschine tragende Laufräder, die an wenigstens einer Achse angeordnet sind.

Die landwirtschaftliche Verteilmaschine kann darüber hinaus eine Zugdeichsel umfassen, mittels welcher die landwirtschaftliche Verteilmaschine an eine landwirtschaftliche Zugmaschine koppelbar ist.

Die Maschine umfasst wenigstens einen Tank mit wenigstens zwei Speicherkammern für das flüssige Medium. Der Tank kann vorzugsweise auf seiner oberen Seite eine Zuführung für das jeweilige flüssige Medium besitzen. Die wenigstens eine erste Speicherkammer sowie die wenigstens eine zweite Speicherkammer umfassen jeweils eine Öffnung zur Entnahme des flüssigen Mediums. Über die Öffnungen sind die Speicherkammern mit einem Leitungsabschnitt, der einen Auslass für das flüssige Medium bereitstellt, in Verbindung gebracht. Der Leitungsabschnitt kann als gemeinsamer Leitungsabschnitt für die wenigstens eine erste Speicherkammer und die wenigstens eine zweite Speicherkammer bzw. als gemeinsamer Leitungsabschnitt für eine Öffnung der wenigstens einen ersten Speicherkammer und eine Öffnung der wenigstens einen zweiten Speicherkammer ausgebildet sein. Somit kann der Leitungsabschnitt durch flüssiges Medium aus der ersten Speicherkammer sowie durch flüssiges Mediums aus der zweiten Speicherkammer versorgt werden.

Der Begriff "Öffnung" soll im Rahmen vorliegender Erfindung breit verstanden werden. Die Öffnungen können jeweils in Form eines Anschlussstutzens gebildet sein und bspw. von der jeweiligen Speicherkammer weg weisen. Insbesondere kann es sein, dass die Anschlussstutzen ggf. schräg nach unten und in Richtung einer Bodenfläche weisen. Die jeweilige Öffnung kann im Bereich eines freien und in Richtung weg von der jeweiligen Speicherkammer weisenden Endes des jeweiligen Anschlussstutzens ausgebildet sein.

Erfindungsgemäß ist vorgesehen, dass der Leitungsabschnitt einen vorzugsweise kreisrunden Auslass - bspw. ausgebildet als Durchbruch - für das flüssige Medium aufweist. Der Auslass kann entgegengesetzt zur Fahrtrichtung der Verteilmaschine im Leitungsabschnitt positioniert sein. Mit dem Auslass kann eine Förderpumpe für das jeweilige Medium in Verbindung stehen.

Für den angesprochenen Fachmann ist klar, dass der ersten Speicherkammer und/oder der zweiten Speicherkammer auch mehr als eine jeweilige Öffnung zugeordnet sein können. Darüber hinaus kann ein Auslass in der Förderleitung ausgebildet sein, in diversen Ausführungsformen kann die Förderleitung jedoch auch mehr als einen Auslass umfassen.

Zudem ist eine Position der Öffnungen derart gewählt, dass bei nicht ausgebildeter seitlicher Neigung der Verteilmaschine bzw. bei einer Horizontalfahrt der Verteilmaschine ein jeweiliger Querschnitt der Öffnungen zumindest anteilig und vorzugsweise vollständig unterhalb eines geringstmöglichen Flüssigkeitsniveaus der beiden Speicherkammern angeordnet ist. Der Querschnitt der Öffnungen kann somit derart gewählt sein, dass bei Weitergabe von flüssigem Medium durch lediglich eine der Öffnungen an den Leitungsabschnitt, bspw. bei Hangfahrten, ein durch den Auslass bzw. ein durch die Förderpumpe ggf. entnommener Volumenstrom nicht unterbrochen oder vermindert wird.

Sofern die definierte seitliche Neigung, welche bspw. zwischen einem Winkelgrad und ca. 15 Winkelgraden, betragen kann, nicht überschritten wird, kann ausreichend flüssiges Medium aus wenigstens einem der beiden Speicherkammern an den Leitungsabschnitt und an den Auslass weitergegeben werden, so dass aus dem Auslass kontinuierlich fluides Medium ohne Luftzufuhr entnommen werden kann. In besonders bevorzugten Ausführungsformen kann eine definierte seitliche Neigung, bis zu welcher ausreichend flüssiges Medium aus wenigstens einer der beiden Speicherkammern an den Leitungsabschnitt und an den Auslass weitergebbar ist, mindestens 8° gegenüber einer Horizontalen betragen. Mit einer solchen definitionsgemäßen seitlichen Neigung ist eine Neigung der Verteilmaschine um eine Fahrzeuglängsachse (Rollbewegung) gemeint, so dass die angegebenen Winkelgrade die Neigung gegenüber einer Fahrzeugquerachse bezeichnen. In der Praxis neigt sich die Verteilmaschine bei schrägem Untergrund während ihrer Fahrbewegung.

Durch die erfindungsgemäße Ausgestaltung kann, wie vorhergehend bereits erwähnt, kontinuierlich aus wenigstens einer der wenigstens zwei Speicherkammern ausreichend flüssiges Medium an den Leitungsabschnitt und an den Auslass weitergegeben werden, so dass eine Förderung von Luft durch die Förderpumpe unterbunden ist. Der Volumenstrom, welcher von wenigstens einem der beiden Speicherkammern an den Leitungsabschnitt weitergegeben wird, ist hierbei mindestens gleich oder größer dem Volumenstrom, welcher durch den Auslass ggf. an die Förderpumpe weitergegeben wird. Erfindungsgemäß sind die Positionen der Öffnungen und des Auslasses dergestalt, dass bei nicht ausgebildeter seitlicher Neigung ein Querschnitt des Auslasses zumindest anteilig vertikal unterhalb des jeweiligen Querschnitts beider Öffnungen angeordnet ist. Insbesondere können bei bevorzugten Ausführungsformen die Positionen der Öffnungen und des Auslasses dergestalt sein, dass ein jeweiliger Querschnitt beider Öffnungen und/oder ein Querschnitt des Auslasses bei nicht ausgebildeter seitlicher Neigung der Verteilmaschine vollständig unterhalb des geringstmöglichen Flüssigkeitsniveaus der beiden Speicherkammern angeordnet ist.

Zudem kann ein vollständiger Öffnungsquerschnitt des Auslasses bis zu einer definierten seitlichen Neigung der Verteilmaschine, welche mindestens 5°, insbesondere mindestens 8°, vorzugsweise mindestens 10° und besonders bevorzugt mindestens 12° betragen kann, unterhalb des geringstmöglichen Flüssigkeitsniveaus zumindest der in Neigungsrichtung neigungsabwärts oder hangabwärts befindlichen Speicherkammer angeordnet sein.

In einer weiteren Ausführungsform kann der Querschnitt der Öffnungen jeweils größer gewählt werden, als ein Querschnitt des Auslasses.

Hierdurch wird sich bei der erfindungsgemäßen Vorrichtung die Möglichkeit offengehalten, Öffnungen mit unterschiedlich großen Querschnitten zu realisieren.

In weiteren Ausführungsformen kann der Leitungsabschnitt zumindest anteilig, vorzugsweise jedoch vollständig bis zur definierten seitlichen Neigung der Verteilmaschine unterhalb des geringstmöglichen in den beiden Speicherkammern einnehmbaren Flüssigkeitsniveaus angeordnet sein. Vorteilhaft wird hierdurch gewährleitstet, dass bis zu definierter seitlicher Neigung das flüssige Medium aus den beiden Speicherkammern an den Leitungsabschnitt weiterführbar und durch den Auslass entnehmbar ist.

Der Leitungsabschnitt kann bspw. als Rohrstück, bspw. aus Kunststoff gefertigt, ausgebildet sein. Sofern die Speicherkammern über die vorherig bereits erwähnten Anschlussstücke bzw. Anschlussstutzen verfügen, ist vorstellbar, dass der als Rohrstück ausgebildete Leitungsabschnitt auf die Anschlussstücke aufsteckbar ist.

Zudem kann es sein, dass der Auslass wenigstens annäherungsweise gleiche Abstände zu der wenigstens einen ersten Speicherkammer und der wenigstens einen zweiten Speicherkammer bzw. zur Öffnung der wenigstens einen ersten Speicherkammer sowie zur Öffnung der wenigstens einen zweiten Speicherkammer aufweist.

In einer bevorzugten Ausführungsform der vorliegenden Erfindung sind die beiden Speicherkammern nicht als separate Einheiten ausgebildet. Hierzu kann ein Speicherbehälter die erste Speicherkammer und die zweite Speicherkammer vermittels einer sich vorzugsweise in Fahrtrichtung erstreckenden Rahmenkonstruktion ausbilden. Die Rahmenkonstruktion kann sich in etwa mittig und in Fahrtrichtung durch den Behälter bzw. den Tank erstrecken und den Behälter in die wenigstens zwei Speicherkammern unterteilen. Die wenigstens eine erste Speicherkammer und die wenigstens eine zweite Speicherkammer können ein identisches Speichervolumen für das flüssige Medium besitzen. Wahlweise und je nach Zweckmäßigkeit sind auch Speicherkammern mit unterschiedlichen Speichervolumina denkbar.

Vorstellbar ist auch, dass die Verteilmaschine eine sich in Fahrtrichtung erstreckende Rahmenkonstruktion umfasst, von bzw. mittels welcher der Tank getragen wird. Die Öffnungen und/oder der Auslass können bei seitlicher Neigung sowie bei nicht ausgebildeter seitlicher Neigung der Verteilmaschine unterhalb der Rahmenkonstruktion angeordnet sein.

Die wenigstens eine erste Speicherkammer und die wenigstens eine zweite Speicherkamm müssen nicht zwingend als zwei fluidisch voneinander entkoppelte Einheiten ausgebildet sein. Denkbar ist vielmehr, dass flüssiges Medium ab einem gewissen Niveau von der wenigstens einen ersten Speicherkammer in die wenigstens eine zweite Speicherkammer und von der wenigstens einen zweiten Speicherkammer in die wenigstens eine erste Speicherkammer übertreten kann. Die wenigstens eine erste Speicherkammer und die wenigstens eine zweite Speicherkammer können somit durch eine Schwallwand voneinander getrennt sein.

Die tragende Rahmenkonstruktion erstreckt sich hierbei mit der Schwallwand in Längsrichtung bzw. in Fahrtrichtung der Verteilmaschine. Bevorzugt können der Auslass und der Leitungsabschnitt unterhalb der Rahmenkonstruktion angeordnet sein.

Zudem können die wenigstens eine erste Speicherkammer und die wenigstens eine zweite Speicherkammer jeweils eine Öffnung besitzen, über welche die Speicherkammern mit dem Leitungsabschnitt in Verbindung gebracht sind. Der Querschnitt der Öffnungen kann derart gewählt sein, dass bei Weitergabe von flüssigem Medium durch lediglich eine der Öffnungen an den Leitungsabschnitt ein durch den Auslass entnehmbarer Volumenstrom nicht unterbrochen und/oder vermindert wird. Steht mit dem Auslass eine Förderpumpe in Verbindung, so kann der Querschnitt der Öffnungen derart gewählt sein, dass bei Weitergabe von flüssigem Medium aus lediglich einer der wenigstens zwei Speicherkammern an den Leitungsabschnitt der den Auslass in Abhängigkeit der Leistung der Förderpumpe passierende Volumenstrom nicht unterbrochen und/oder vermindert wird. Bei seitlicher Neigung der Verteilmaschine kann es sein, dass durch eine Öffnung der wenigstens zwei Speicherkammern flüssiges Medium an den Leitungsabschnitt weitergegeben wird, wohingegen eine Weitergabe durch die Öffnung der weiteren Speicherkammer an den Leitungsabschnitt unterbleibt.

Um die Stabilität der Verteilmaschine zu erhöhen, können die wenigstens eine erste Speicherkammer und die wenigstens eine zweite Speicherkammer derart ausgebildet sein, dass sie sich bei nicht vorhandener Neigung der Verteilmaschine im Wesentlichen auf gleicher Höhe bzw. im gleichen Abstand zu einer Bodenfläche befinden.

Auch kann die Position der Öffnungen derart gewählt sein, dass sie sich bei nicht ausgebildeter seitlicher Neigung der Verteilmaschine auf gleichem vertikalem Niveau befinden und bei ggf. ausgebildeter seitlicher Neigung der Verteilmaschine unterschiedliche vertikale Niveaus einnehmen.

Weiter können die Öffnungen und/oder der Auslass einen kreisrunden Querschnitt besitzen.

Bei bevorzugten Ausführungsformen ist zudem vorstellbar, dass die Speicherkammern bei nicht ausgebildeter seitlicher Neigung der Verteilmaschine in ihrem Bodenbereich jeweils ein Gefälle aufweisen, mittels welchem das flüssige Medium in Richtung der jeweiligen Öffnung führbar ist. Das Gefälle der wenigstens einen ersten Speicherkammer und das Gefälle der wenigstens einen zweiten Speicherkammer können bei nicht ausgebildeter seitlicher Neigung der Verteilmaschine zumindest abschnittsweise nicht parallel zueinander orientiert sein. Vorteilhafterweise kann hiermit sichergestellt werden, dass auch bei seitlicher Neigung während einer Feldfahrt über wenigstens eines der Gefälle flüssiges Medium in Richtung einer Öffnung geführt wird und die Förderpumpe ggf. auch bei jeglicher seitlicher Hangneigung durchgehend mit ausreichend Flüssigkeit aus zumindest einer der beiden Speicherkammern versorgt wird.

Weiter kann bis zu einer definierten seitlichen Neigung der Verteilmaschine, welche mindestens 5° gegenüber eine Horizontalen beträgt, der Querschnitt wenigstens einer der in Neigungsrichtung neigungsabwärts oder hangabwärts befindlichen Öffnung zumindest anteilig vertikal unterhalb des geringstmöglichen Flüssigkeitsniveaus der wenigstens einen zugehörigen neigungsabwärts oder hangabwärts befindlichen Speicherkammer angeordnet sein. Auch kann bis zu einer definierten seitlichen Neigung der Verteilmaschine, welche mindestens 5° gegenüber einer Horizontalen beträgt, der Querschnitt wenigstens einer der in Neigungsrichtung neigungsaufwärts oder hangaufwärts befindlichen Öffnung zumindest anteilig vertikal unterhalb des geringstmöglichen Flüssigkeitsniveaus wenigstens einer neigungsabwärts oder hangabwärts befindlichen Speicherkammer angeordnet sein.

Nachfolgend finden sich nochmals einige Aspekte der erfindungsgemäßen Maschine zusammengefasst, die zum besseren Verständnis dargestellt sind. Es wird darauf hingewiesen, dass es sich hierbei um eine beispielhafte Ausführungsform handelt, die nicht einschränkend zu verstehen ist.

So betrifft Gegenstand vorliegender Entwicklung eine landwirtschaftliche Verteilmaschine (selbstfahrend oder an eine Zugmaschine angehängt) zum Ausbringen von flüssigen Medien wie Düngemittel oder Pflanzenschutzmittel oder dergleichen. Die Verteilmaschine umfasst wenigstens zwei in Fahrtrichtung nebeneinander angeordnete Speicherkammern für das flüssige Medium, welche beiden Speicherkammern über einen Leitungsabschnitt zur Entnahme des flüssigen Mediums aus den beiden Speicherkammern fluidisch miteinander in Verbindung stehen. Zudem weist der Leitungsabschnitt wenigstens einen Auslass für das flüssige Medium auf, der bspw. mit einer Flüssigkeitspumpe zum Verteilen des flüssigen Mediums auf dem Acker dienen kann. Der vollständige Öffnungsquerschnitt des wenigstens einen Auslasses des Leitungsabschnittes befindet sich bis zu einer definierten seitlichen Neigung der Verteilmaschine unterhalb eines geringstmöglichen Flüssigkeitsniveaus zumindest der in Neigungsrichtung neigungsabwärts oder hangabwärts befindlichen Speicherkammer. Durch diese Anordnung kann erreicht werden, dass unter allen Betriebsbedingungen und bei noch ausreichender Restflüssigkeit in wenigstens einem der beiden Speicherkammern keine Luft gefördert wird, sondern der Flüssigkeitsstrom, der den Auslass passiert, ununterbrochen bleibt und nicht abreißt oder unterbrochen wird.

Die definierte bzw. für die ordnungsgemäße Funktion maximal zugelassene seitliche Neigung kann bspw. wenigstens 8 Winkelgrade, vorzugsweise jedoch wenigstens 10 Winkelgrade betragen. Weiterhin kann vorgesehen sein, dass eine das flüssige Medium absaugende Förderpumpe mit dem Auslass in fluidischer Verbindung steht.

Der Leitungsabschnitt ist vorzugsweise zumindest anteilig, vorzugsweise jedoch vollständig bis zur definierten seitlichen Neigung der Verteilmaschine unterhalb des geringstmöglich in den beiden Speicherkammern einnehmbaren Flüssigkeitsniveaus angeordnet.

Der Leitungsabschnitt kann bspw. als Rohrstück ausgebildet sein. Außerdem kann vorgesehen sein, dass der wenigstens eine Auslass wenigstens näherungsweise gleiche Abstände zu der wenigstens einen ersten Speicherkammer und der wenigstens einen zweiten Speicherkammer aufweist. Sinnvollerweise ist genau ein Auslass vorgesehen. Allerdings sind auch Varianten mit zwei oder mehr Auslässen oder Auslassöffnungen, die ggf. mit zwei oder mehr Flüssigkeitspumpen in fluidischer Verbindung stehen können, möglich und von der Erfindung mit umfasst.

Eine Variante der erfindungsgemäßen Verteilmaschine kann vorsehen, dass ein Speicherbehälter die erste Speicherkammer und die zweite Speicherkammer durch Unterteilung vermittels einer sich vorzugsweise in Fahrtrichtung erstreckenden Schwallwand ausbildet. Außerdem kann die Schwallwand zumindest abschnittsweise um eine tragende Rahmenkonstruktion der Verteilmaschine geführt sein.

Vorzugs- und sinnvollerweise sind der Auslass und der Leitungsabschnitt unterhalb der Schwallwand angeordnet.

Wahlweise können die wenigstens eine erste Speicherkammer sowie die wenigstens eine zweite Speicherkammer jeweils ungefähr gleiche Speichervolumina für das flüssige Medium besitzen. Außerdem kann vorgesehen sein, dass die wenigstens eine erste Speicherkammer und die wenigstens eine zweite Speicherkammer jeweils eine Öffnung besitzen, über welche die Speicherkammern mit dem Leitungsabschnitt in Verbindung gebracht sind, wobei der Querschnitt der Öffnungen derart gewählt ist, dass bei Weitergabe von flüssigem Medium durch lediglich eine der Öffnungen an den Leitungsabschnitt ein durch den Auslass entnehmbarer Volumenstrom nicht unterbrochen und/oder vermindert wird.

Schließlich können bei der erfindungsgemäßen Verteilmaschine die wenigstens eine erste Speicherkammer und die wenigstens eine zweite Speicherkammer derart ausgebildet sein, dass sie sich bei nicht vorhandener Neigung der Verteilmaschine im Wesentlichen auf gleichen Höhenniveaus befinden.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine schematische Perspektivansicht einer Ausführungsform einer erfindungsgemäßen Verteilmaschine bei nicht vorhandener seitlicher Neigung.
Fig. 2 zeigt eine detailierte Ansicht mehrerer Komponenten der Verteilmaschine aus Figur 1 bei erster seitlicher Neigung der Verteilmaschine.
Fig. 3 zeigt eine detailierte Ansicht der Komponenten aus Fig. 2 mit weiterem Niveau des flüssigen Mediums.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Verteilmaschine ausgestaltet sein kann und stellen keine abschließende Begrenzung dar.

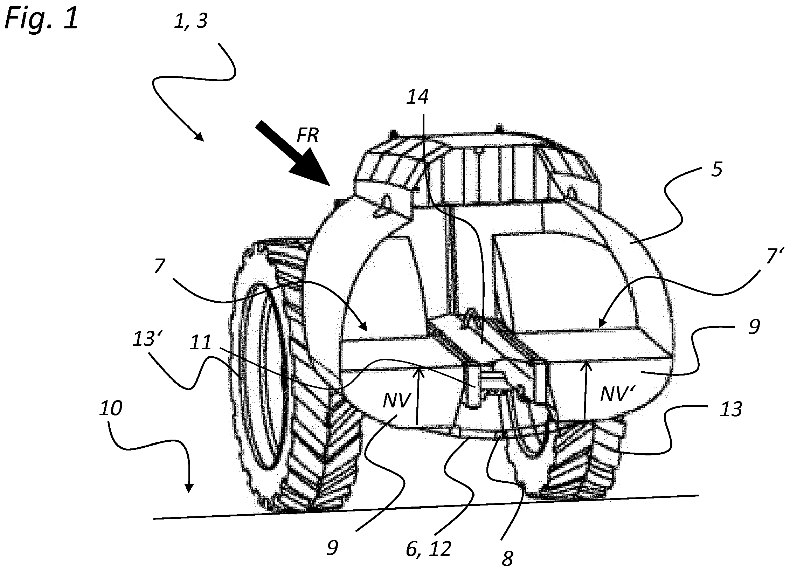

Die Darstellung der Fig. 1 zeigt eine schematische Perspektivansicht einer Ausführungsform einer erfindungsgemäßen Verteilmaschine 1, vorliegend ausgebildet als Pflanzenschutzspritze 3.

Die Verteilmaschine 1 umfasst zwei in Fahrtrichtung FR nebeneinander angeordnete Speicherkammerrn 7 und 7' für das Pflanzenschutzmittel bzw. das flüssige Medium 9. Zur Entnahme des flüssigen Mediums 9 aus der ersten Speicherkammer 7 und aus der zweiten Speicherkammer 7' sind die beiden Speicherkammern 7 und 7' über einen Leitungsabschnitt 6 fluidisch miteinander verbunden. Der Leitungsabschnitt 6 ist vorliegend als Rohrstück 12 ausgebildet.

Figur 1 lässt darüber hinaus erkennen, dass die beiden Speicherkammern 7 und 7' nicht vollständig fluidisch voneinander getrennt sind. Ab einem gewissen Flüssigkeitspegel im Tank 5 oder ab einer gewissen Neigung der Verteilmaschine 1 kann flüssiges bzw. fluides Medium 9 die Schwallwand 14 passieren und zwischen den beiden Speicherkammern 7 und 7' wechseln.

Der Leitungsabschnitt 6 bzw. das Rohrstück 12 weist einen Auslass 8 für das fluide Medium 9 auf, an welchen eine Förderpumpe (nicht dargestellt) angeschlossen ist. Das fluide Medium 9 ist somit aus den beiden Speicherkammern 7 und 7' an den Leitungsabschnitt 6 bzw. an das Rohrstück 12 weiterführbar und über den Auslass 8 aus dem Leitungsabschnitt 6 bzw. aus dem Rohrstück 12 entnehmbar.

Die Verteilmaschine 1 steht in Fig. 1 über zwei Laufräder 13 und 13' auf einer horizontal orientierten Bodenfläche 10 auf und besitzt somit keine seitliche Neigung. Das vertikale Niveau NV des flüssigen Mediums 9 in der ersten Speicherkammer 7 entspricht daher dem vertikalen Niveau NV' des flüssigen Mediums 9 in der zweiten Speicherkammer 7'. Zu erkennen ist in Fig. 1 außerdem, dass bei vorliegend nicht vorhandener seitlicher Neigung der Querschnitt des Auslasses 8 vollständig unterhalb des Niveaus NV des fluiden Mediums 9 der ersten Speicherkammer 7 und unterhalb des Niveaus NV' des fluiden Mediums 9 der zweiten Speicherkammer 7' angeordnet ist. Zudem ist der Leitungsabschnitt 6 vollständig unterhalb des Niveaus NV des fluiden Mediums 9 der ersten Speicherkammer 7 und unterhalb des Niveaus NV' des fluiden Mediums 9 der zweiten Speicherkammer 7' angeordnet. Es strömt somit bei vorliegender horizontal orientierter Bodenfläche 10 flüssiges Medium 9 aus der ersten Speicherkammer 7 und aus der zweiten Speicherkammer 7' in den Leitungsabschnitt 6 und wird über den Auslass 8 entnommen.

Da aus der ersten Speicherkammer 7 und aus der zweiten Speicherkammer 7' permanent flüssiges Medium 9 an den Leitungsabschnitt 6 weiterführbar ist, wird über den Auslass 8 keine Luft durch die Förderpumpe angesaugt bzw. wird über den Auslass 8 keine Luft weitergegeben.

Die zwei Speicherkammern 7 und 7' sind Bestandteil eines Tanks bzw. Behälters 5 und werden linksseitig und rechtssichtig von der sich in Fahrtrichtung FR der Verteilmaschine 1 erstreckenden Schwallwand 14 ausgebildet. Die Schwallwand 14 umgibt eine Rahmenkonstruktion 11 der Verteilmaschine 1, an welcher Rahmenkonstruktion 11 bspw. eine nicht dargestellte Zugdeichsel befestigt sein kann. Die Schwallwand 14 ist in etwa mittig im Tank bzw. im Behälter 5 positioniert und trennt den Innenraum des Tanks bzw. des Behälters 5 in die zwei Speicherbehältnisse 7 mit zumindest näherungsweise identischen Speichervolumina.

Erreicht das flüssige Medium 9 in den Speicherkammern 7 und 7' ein bestimmtes Niveau, kann es, wie vorhergehend bereits erwähnt von einer der Speicherkammern 7 bzw. 7' in die weitere Speicherkammer 7 bzw. 7' oberhalb der Schwallwand 14 übertreten.

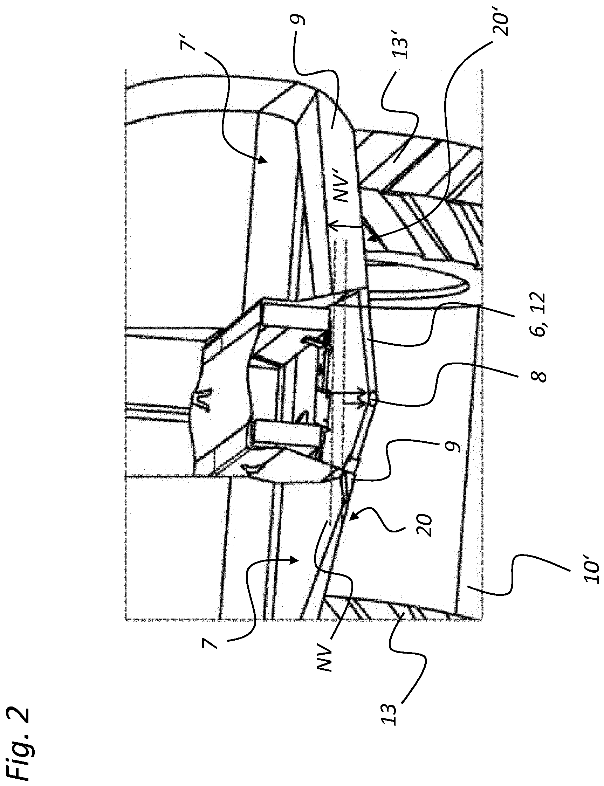

Die Fig. 2 zeigt eine detailierte Ansicht mehrerer Komponenten der Verteilmaschine 1 aus Fig. 1 bei erster seitlicher Neigung der Verteilmaschine 1. Die Verteilmaschine 1 steht hierbei über die Laufräder 13 und 13' auf einer geneigten Bodenfläche 10' auf.

Aus der Neigung der Verteilmaschine 1 resultierend strömt nun überwiegend flüssiges Medium 9 aus der ersten Speicherkammer 7 in den Leitungsabschnitt 6, während reduziert flüssiges Medium 9 aus der zweiten Speicherkammer 7' in den Leitungsabschnitt 6 strömt.

Das Niveau des flüssigen Mediums 9 in der ersten Speicherkammer 7 ist nun geringer als das Niveau NV' des flüssigen Mediums 9 in der zweiten Speicherkammer 7' ausgebildet. Weiterhin ist jedoch, wie mittels Phantomlinien und Pfeildarstellung verdeutlicht, der vollständige Öffnungsquerschnitt des Auslasses 8 unterhalb des Flüssigkeitsniveaus NV bzw. NV' der zwei Speicherkammern 7 und 7' angeordnet.

Zudem ist ein jeweiliges Gefälle 20 bzw. 20' zu erkennen, welches die Speicherkammern 7 und 7' in ihrem jeweiligen Bodenbereich ausbilden. Die Gefälle 20 und 20' sind nicht parallel zueinander orientiert. Durch die Gefälle 20 und 20' kann bei jeglicher Neigung der Verteilmaschine 1 sowie bei Feldfahrt der Verteilmaschine 1 auf horizontalem Boden 10 gewährleistet werden, dass über zumindest eine der Speicherkammern 7 und/oder 7' flüssiges Medium 9 an den Auslass 8 weitergegeben wird.

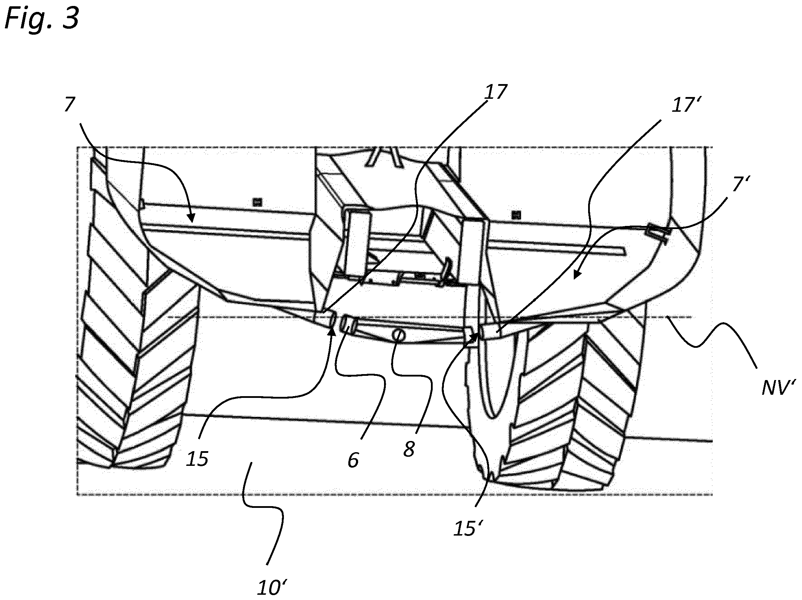

Darüber hinaus zeigt die Fig. 3 eine detaillierte Ansicht der Komponenten aus Fig. 2 mit weiterem Niveau des flüssigen Mediums 9. Wie zu erkennen, ist in der ersten Speicherkammer 7 kein flüssiges Medium 9 mehr vorhanden, während das flüssige Medium 9 in der zweiten Kammer ein geringes Niveau NV' erreicht hat. Der vollständige Öffnungsquerschnitt des Auslasses 8 ist weiterhin unterhalb des Niveaus NV' angeordnet. Ebenso ist der Querschnitt der Öffnung 15' weiterhin vollständig unterhalb des in Figur 3 dargestellten geringstmöglichen Niveaus NV' der zweiten Speicherkammer 7' angeordnet.

Fig. 3 lässt zudem die Öffnungen 15 und 15' de ersten Speicherkammer 7 und der zweiten Speicherkammer 7' gut erkennen, wobei die Öffnungen 15 und 15' als Bestandteil eines Anschlussstutzens 17 bzw. 17' ausgebildet sind. Der erste Anschlussstutzen 17 ist der ersten Speicherkammer 7 zugeordnet ist und der zweite Anschlussstutzen 17' der zweiten Speicherkammer 7'. Über die Anschlussstutzen 17 und 17' wird fluides Mediums an den Leitungsabschnitt 6 weitergegeben. Zur Verbindung wird der als Rohrstück 12 ausgebildete Leitungsabschnitt 6 im Bereich seiner freien Enden auf die Anschlussstutzen 17 und 17' bzw. auf die Öffnungen 15 und 15' aufgesteckt. Der Anschlussstutzen 17' ist hierbei so ausgelegt, dass über diesen noch eine ausreichende Menge an flüssigem Medium 9 an den Auslass 8 weitergegeben werden kann, so dass damit eine betriebssichere Funktion einer dem Auslass 8 nachgeordneten Flüssigkeitspumpe (hier nicht dargestellt) gewährleistet ist.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste:

- 1: Verteilmaschine
- 3: Pflanzenschutzspritze, Transportfahrzeug
- 5: Behälter
- 6: Leitungsabschnitt
- 7: Speicherkammer
- 8: Auslass
- 9: fluides Medium, flüssiges Medium
- 10: horizontale Bodenfläche
- 11: Rahmenkonstruktion
- 12: Rohrstück
- 13: Laufrad
- 15: Öffnung
- 17: Anschlussstutzen
- 20: Gefälle

- FR: Fahrtrichtung
- NV: Niveau des flüssigen Mediums

## Patentansprüche

1. Fahrbare landwirtschaftliche Verteilmaschine (1) für flüssige Medien (9) wie Pflanzenschutzmittel, Düngemittel oder dergleichen, umfassend einen Tank (5) mit wenigstens zwei in Fahrtrichtung (FR) nebeneinander angeordneten Speicherkammern (7, 7') für das flüssige Medium (9), wobei die wenigstens eine erste Speicherkammer (7) und die wenigstens eine zweite Speicherkammer (7') jeweils eine Öffnung (15, 15') zur Entnahme des flüssigen Mediums (9) besitzen, über welche Öffnungen (15, 15') die Speicherkammern (7, 7') mit einem Leitungsabschnitt (6), der einen Auslass (8) für das flüssige Medium (9) bereitstellt, in Verbindung gebracht sind und eine Position der Öffnungen (15, 15') derart gewählt ist, dass bei nicht ausgebildeter seitlicher Neigung der Verteilmaschine (1) ein jeweiliger Querschnitt beider Öffnungen (15, 15') zumindest anteilig vertikal unterhalb eines geringstmöglichen Flüssigkeitsniveaus (NV, NV') der beiden Speicherkammern (7, 7') angeordnet ist, **dadurch gekennzeichnet, dass** bei nicht ausgebildeter seitlicher Neigung ein Querschnitt des Auslasses (8) zumindest anteilig vertikal unterhalb des jeweiligen Querschnitts beider Öffnungen (15, 15') angeordnet ist.

2. Verteilmaschine (1) nach Anspruch 1, bei welcher ein jeweiliger Querschnitt beider Öffnungen (15, 15') und/oder ein Querschnitt des Auslasses (8) bei nicht ausgebildeter seitlicher Neigung der Verteilmaschine vollständig unterhalb des geringstmöglichen Flüssigkeitsniveaus (NV, NV') der beiden Speicherkammern (7, 7') angeordnet ist.

3. Verteilmaschine nach Anspruch 1 oder Anspruch 2, bei der ein vollständiger Öffnungsquerschnitt des Auslasses (8) bis zu einer definierten seitlichen Neigung der Verteilmaschine, welche mindestens 5° gegenüber einer Horizontalen beträgt, unterhalb des geringstmöglichen Flüssigkeitsniveau (NV, NV') zumindest der in Neigungsrichtung neigungsabwärts oder hangabwärts befindlichen Speicherkammer (7, 7') angeordnet ist.

4. Verteilmaschine nach einem oder mehreren der Ansprüche 1 bis 3, wobei der Querschnitt der Öffnungen (15, 15') jeweils größer gewählt ist, als ein Querschnitt des Auslass (8).

5. Verteilmaschine nach einem oder mehreren der Ansprüche 1 bis 4, wobei die Verteilmaschine eine Förderpumpe für das flüssige Medium (9) umfasst, die an den Auslass (8) gekoppelt ist.

6. Verteilmaschine nach einem der Ansprüche 1 bis 5, wobei der Leitungsabschnitt (6) zumindest anteilig, vorzugsweise jedoch vollständig bis zu einer definierten seitlichen Neigung der Verteilmaschine (1), welche mindestens 5° gegenüber einer Horizontalen beträgt, unterhalb des geringstmöglichen in den beiden Speicherkammern (7, 7') einnehmbaren Flüssigkeitsniveaus (NV, NV') angeordnet ist.

7. Verteilmaschine nach einem der Ansprüche 1 bis 6, wobei der Auslass (8) wenigstens näherungsweise gleiche Abstände zu der wenigstens einen ersten Speicherkammer (7) und der wenigstens einen zweiten Speicherkammer (7') und/oder zu der Öffnung (15) der wenigstens einen ersten Speicherkammer (7) sowie zu der Öffnung (15') der wenigstens einen zweiten Speicherkammer (7') aufweist.

8. Verteilmaschine nach einem oder mehreren der Ansprüche 1 bis 7, bei welcher der Tank (5) mit der wenigstens einen ersten Speicherkammer (7) und der wenigstens einen zweiten Speicherkammer (7') durch eine sich in Fahrtrichtung (FR) erstreckende Rahmenkonstruktion (11) getragen wird, wobei die Öffnungen (15, 15') und/oder der Auslass (8) vertikal unterhalb der Rahmenkonstruktion (11) angeordnet sind.

9. Verteilmaschine nach einem der Ansprüche 1 bis 8, wobei die wenigstens eine erste Speicherkammer (7) und die wenigstens eine zweite Speicherkammer (7') jeweils ungefähr gleiche Speichervolumina für das flüssige Medium (9) besitzen.

10. Verteilmaschine nach einem oder mehreren der Ansprüche 1 bis 9, bei welcher die Position der Öffnungen (15, 15') derart gewählt ist, dass sie sich bei nicht ausgebildeter seitlicher Neigung der Verteilmaschine auf gleichem vertikalem Niveau befinden.

11. Verteilmaschine nach einem oder mehreren der Ansprüche 1 bis 10, bei welcher die Öffnungen (15, 15') als Bestandteil eines von der jeweiligen Speicherkammer (7, 7') schräg und in Richtung einer Bodenfläche weisenden Anschlussstutzens (17, 17') für den Leitungsabschnitt (6) ausgebildet sind.

12. Verteilmaschine nach einem oder mehreren der Ansprüche 1 bis 11, bei welcher die Öffnungen (15, 15') und/oder der Auslass (8) einen kreisrunden Querschnitt besitzen.

13. Verteilmaschine nach einem oder mehreren der Ansprüche 1 bis 12, bei welcher die Speicherkammern (7, 7') bei nicht ausgebildeter seitlicher Neigung der Verteilmaschine in ihrem Bodenbereich jeweils ein Gefälle (20, 20') aufweisen, mittels welchem das flüssige Medium (9) in Richtung der jeweiligen Öffnung (15, 15') führbar ist.

14. Verteilmaschine nach einem oder mehreren der Ansprüche 1 bis 13, bei der bis zu einer definierten seitlichen Neigung der Verteilmaschine, welche mindestens 5° gegenüber einer Horizontalen beträgt, der Querschnitt wenigstens einer in Neigungsrichtung neigungsabwärts oder hangabwärts befindlichen Öffnung (15, 15') zumindest anteilig vertikal unterhalb des geringstmöglichen Flüssigkeitsniveaus (NV, NV') der zugehörigen wenigstens einen neigungsabwärts oder hangabwärts befindlichen Speicherkammer (7, 7') angeordnet ist.

## Claims

1. A drivable agricultural distribution machine (1) for liquid media (9), such as plant protection products, fertilisers, or the like, comprising a tank (5) with at least two reservoir chambers (7, 7') for the liquid medium (9), which reservoir chambers (7, 7') are arranged next to each other in driving direction (FR), wherein the at least one first reservoir chamber (7) and the at least one second reservoir chamber (7') each have an opening (15, 15') for withdrawing the liquid medium (9), via which openings (15, 15') the reservoir chambers (7, 7') are brought into connection to a pipe section (6), which provides an outlet (8) for the liquid medium (9), and a position of the openings (15, 15') is selected such that, in the instance of non-established lateral tilt of the distribution machine (1), a particular cross section of both openings (15, 15') is arranged at least proportionately vertically below a least possible liquid level (NV, NV') of the two reservoir chambers (7, 7'), **characterised in that**, in the instance of non-established lateral tilt, a cross section of the outlet (8) is arranged at least proportionately vertically below the particular cross section of both openings (15, 15').

2. The distribution machine (1) as recited in claim 1 in which, in the instance of non-established lateral tilt of the distribution machine, a particular cross section of both openings (15, 15') and/or a cross section of the outlet (8) is arranged completely below the least possible liquid level (NV, NV') of the two reservoir chambers (7, 7').

3. The distribution machine as recited in claim 1 or claim 2 in which, up to a specified lateral tilt of the distribution machine, which lateral tilt can be at least 5° in relation to a horizontal, a complete opening cross section of the outlet (8) is arranged below the least possible liquid level (NV, NV') at least in the reservoir chamber (7, 7') that is located down dip or down slope in tilt direction.

4. The distribution machine as recited in one or more of the claims 1 to 3 wherein the cross section of the openings (15, 15') is in each case selected to be greater than a cross section of the outlet (8).

5. The distribution machine as recited in one or more of the claims 1 to 4 wherein the distribution machine comprises a conveyor pump for the liquid medium (9), which conveyor pump is coupled to the outlet (8).

6. The distribution machine as recited in one of the claims 1 to 5 wherein, up to a specified lateral tilt of the distribution machine (1), which lateral tilt is at least 5° in relation to a horizontal, the pipe section (6) is arranged at least proportionately, preferably, however, completely below the least possible liquid level (NV, NV') occupiable in the two reservoir chambers (7, 7').

7. The distribution machine as recited in one of the claims 1 to 6 wherein the outlet (8) has at least approximately the same distances to the at least one first reservoir chamber (7) and the at least one second reservoir chamber (7') and/or to the opening (15) of the at least one first reservoir chamber (7) as well as to the opening (15') of the at least one second reservoir chamber (7').

8. The distribution machine as recited in one or more of the claims 1 to 7 in which the tank (5) with the at least one first reservoir chamber (7) and the at least one second reservoir chamber (7') is supported by a frame structure (11) extending in driving direction (FR), wherein the openings (15, 15') and/or the outlet (8) are arranged vertically below the frame structure (11).

9. The distribution machine as recited in one of the claims 1 to 8 wherein the at least one first reservoir chamber (7) and the at least one second reservoir chamber (7') each have approximately the same reservoir capacities for the liquid medium (9).

10. The distribution machine as recited in one or more of the claims 1 to 9 in which the position of the openings (15, 15') is selected such that they are located at the same vertical level in the instance of non-established lateral tilt of the distribution machine.

11. The distribution machine as recited in one or more of the claims 1 to 10 in which the openings (15, 15') are each designed as a component part of a connecting pipe (17, 17') for the pipe section (6), which connecting pipe (17, 17') faces diagonally from the particular reservoir chamber (7, 7') and toward a ground surface.

12. The distribution machine as recited in one or more of the claims 1 to 11 in which the openings (15, 15') and/or the outlet (8) have/has a circular cross section.

13. The distribution machine as recited in one or more of the claims 1 to 12 in which, in the instance of non-established lateral tilt of the distribution machine, the reservoir chambers (7, 7') each have a downward gradient (20, 20') in their bottom area, by means of which downward gradient (20, 20') the liquid medium (9) is guidable toward the particular opening (15, 15').

14. The distribution machine as recited in one or more of the claims 1 to 13 in which, up to a specified lateral tilt of the distribution machine, which lateral tilt is at least 5° in relation to a horizontal, the cross section of at least one opening (15, 15') located down dip or down slope in tilt direction is arranged at least proportionately vertically below the least possible liquid level (NV, NV') of the associated at least one reservoir chamber (7, 7') that is located down dip or down slope.

## Revendications

1. Machine de distribution agricole roulante (1) pour produits liquides (9) tels que produits phytosanitaires, engrais ou équivalents, comprenant un réservoir (5) doté d'au moins deux chambres de stockage (7, 7') pour le produit liquide (9), agencées l'une à côté de l'autre dans le sens de la marche (FR), la/les première(s) chambre(s) de stockage (7) et la/les deuxième(s) chambre(s) de stockage (7') possédant chacune un orifice (15, 15') pour retirer le produit liquide (9), ces orifices (15, 15') reliant les chambres de stockage (7, 7') à un tronçon de conduite (6) qui fournit une sortie (8) au produit liquide (9), et une position des orifices (15, 15') étant choisie de telle sorte qu'en cas d'absence d'inclinaison latérale de la machine de distribution (1), une section de chacun des deux orifices (15, 15') est agencée au moins en partie à la verticale en dessous d'un niveau de liquide (NV, NV') des deux chambres de stockage (7, 7') le plus bas possible, **caractérisé en ce qu'**en cas d'absence d'inclinaison latérale, une section de la sortie (8) est agencée au moins en partie à la verticale en dessous de chaque section des deux orifices (15, 15').

2. Machine de distribution (1) selon la revendication 1, dans laquelle une section de chacun des deux orifices (15, 15') et/ou une section de la sortie (8) est agencée, en cas d'absence d'inclinaison latérale de la machine de distribution, entièrement en dessous du niveau de liquide le plus bas possible (NV, NV') des deux chambres de stockage (7, 7').

3. Machine de distribution selon la revendication 1 ou la revendication 2, dans laquelle est agencée, jusqu'à une inclinaison latérale définie de la machine de distribution d'au moins 5° par rapport à une ligne horizontale, une section d'orifice complète de la sortie (8) en dessous du niveau de liquide le plus bas possible (NV, NV') au moins de la chambre de stockage (7, 7') se trouvant dans le sens de l'inclinaison vers le bas de l'inclinaison ou vers le bas de la pente.

4. Machine de distribution selon l'une quelconque ou plusieurs des revendications 1 à 3, la section des orifices (15, 15') étant choisie à chaque fois plus grande qu'une section de la sortie (8).

5. Machine de distribution selon l'une quelconque ou plusieurs des revendications 1 à 4, la machine de distribution comprenant une pompe d'alimentation pour le produit liquide (9), laquelle est couplée à la sortie (8).

6. Machine de distribution selon l'une quelconque des revendications 1 à 5, le tronçon de conduite (6) étant agencé au moins en partie, de préférence cependant complètement jusqu'à une inclinaison latérale définie de la machine de distribution (1) d'au moins 5° par rapport à une ligne horizontale, en dessous du niveau de liquide (NV, NV') le plus bas possible dans les deux chambres de stockage (7, 7').

7. Machine de distribution selon l'une quelconque des revendications 1 à 6, dans laquelle la sortie (8) est au moins approximativement aux mêmes distances de la/des première(s) chambre(s) de stockage (7) que de la/des deuxième(s) chambre(s) de stockage (7') et/ou de l'orifice (15) de la/des première(s) chambre(s) de stockage (7) que de l'orifice (15') de la/des deuxième(s) chambre(s) de stockage (7').

8. Machine de distribution selon l'une quelconque ou plusieurs des revendications 1 à 7, dans laquelle le réservoir (5) doté de la/des première(s) chambre(s) de stockage (7) et de la/des deuxième(s) chambre(s) de stockage (7') est porté par une structure de base (11) s'étendant dans le sens de la marche (FR), les orifices (15, 15') et/ou la sortie (8) étant agencés à la verticale en dessous de la structure de base (11).

9. Machine de distribution selon l'une quelconque des revendications 1 à 8, la/les première(s) chambre(s) de stockage (7) et la/les deuxième(s) chambre(s) de stockage (7') possédant chacune environ le même volume de stockage pour le produit liquide (9).

10. Machine de distribution selon l'une quelconque ou plusieurs des revendications 1 à 9, dans laquelle la position des orifices (15, 15') est choisie de telle sorte qu'ils se trouvent verticalement au même niveau en cas d'absence d'inclinaison latérale de la machine de distribution.

11. Machine de distribution selon l'une quelconque ou plusieurs des revendications 1 à 10, dans laquelle les orifices (15, 15') sont conçus en tant que pièce constitutive d'un piètement de raccordement (17, 17') pour le tronçon de conduite (6), lequel piètement est dirigé obliquement vers une surface au sol à partir de la chambre de stockage (7, 7') correspondante.

12. Machine de distribution selon l'une quelconque ou plusieurs des revendications 1 à 11, dans laquelle les orifices (15, 15') et/ou la sortie (8) possèdent une section circulaire.

13. Machine de distribution selon l'une quelconque ou plusieurs des revendications 1 à 12, dans laquelle les chambres de stockage (7, 7') présentent chacune dans leur zone de fond, en cas d'absence d'inclinaison latérale de la machine de distribution, une pente (20, 20') au moyen de laquelle le produit liquide (9) est guidé vers l'orifice correspondant (15, 15').

14. Machine de distribution selon l'une quelconque ou plusieurs des revendications 1 à 13, dans laquelle, jusqu'à une inclinaison latérale définie de la machine de distribution d'au moins 5° par rapport à une ligne horizontale, la section au moins d'un orifice (15, 15') se trouvant dans le sens de l'inclinaison vers le bas de l'inclinaison ou vers le bas de la pente, est agencée au moins en partie à la verticale en dessous du niveau de liquide (NV, NV') le plus bas possible de la/des chambre(s) de stockage (7, 7') correspondante(s) se trouvant vers le bas de l'inclinaison ou vers le bas de la pente.
